# EUROPÄISCHE PATENTANMELDUNG

(11) **EP 3 822 445 A1**
(43) Veröffentlichungstag der Anmeldung: **19.05.2021**
(21) Anmeldenummer: 20207044.7
(22) Anmeldetag: 11.11.2020
(51) Int. Cl.: E05F 15/665, A01K 1/00

(54) **TÜRVORRICHTUNG UND VERFAHREN ZUM BETÄTIGEN EINER TÜRVORRICHTUNG**

(30) Priorität: 12.11.2019 DE 102019217469
(71) Anmelder: Jost, Ilka, 04838 Doberschütz (DE)
(72) Erfinder: JOST, Gerd, 04838 Doberschütz (DE)
(74) Vertreter: Hecht, Jan-David

(57) **Zusammenfassung**

Die vorliegende Erfindung betrifft eine Türvorrichtung (10), die eine Verriegelung (32) des Schiebers (12) besitzt, die leicht und ohne manuellen Zugriff betätigbar ist und dabei aber weder von den eingehausten Tieren selbst noch von ausgesperrten Beutegreifern geöffnet werden kann. Die Verrieglung (32) besitzt eine Selbstblockierung und weist einen Nothalt einschließlich einer Notöffnungsfunktion für die Schließung des Schiebers (12) auf. Dabei ist die Türvorrichtung (10) konstruktiv einfach und kostengünstig aufgebaut.

## Beschreibung

Die vorliegende Erfindung betrifft eine Türvorrichtung nach dem Oberbegriff von Anspruch 1 und ein Verfahren zum Betätigen einer Türvorrichtung nach dem Oberbegriff von Anspruch 12.

Solche Türvorrichtungen mit einem in einer Führung angeordneten Schieber und einem flexiblen Zugelement, das von einem Antrieb betätigbar ist, wobei der Schieber mit Hilfe des flexiblen Zugelements in der Führung von einer geöffneten in eine geschlossene Betriebsstellung vertikal verlagerbar ist, sind vielfältig im Einsatz, vor allem in der Landwirtschaft im Bereich der Tierhaltung. In diesem Bereich sind solche Türvorrichtungen auch als "Hühnerklappe" geläufig.

Solche Türvorrichtungen müssen gegen ungewollte Öffnung durch Beutegreifer, wie Marder, Waschbären oder Füchse, gesichert werden. Dazu werden meist Riegel verwendet, wie es in DE 1 607 611 U und DE 1 614 727 U beschrieben ist.

Nachteilig daran ist allerdings, dass die durch die Türvorrichtung eingehausten Tiere die Türvorrichtung selbständig öffnen können, was nicht immer erwünscht ist. Eine manuelle Öffnung solcher Türklappen durch befugte Personen ist zwar eine mögliche Alternative, allerdings ist diese Lösung mit einem hohen Arbeitsaufwand, zumal bei einer Vielzahl von zu betreuenden Türvorrichtungen verbunden.

Außerdem besteht bei solchen Türvorrichtungen das Problem, dass beispielsweise Hühner von einem sich schließenden Schieber nach unten gedrückt werden. Da die Hühner sich nicht dagegen wehren, werden Sie dadurch quasi gefangen.

Es ist daher die Aufgabe der vorliegenden Erfindung, eine Türvorrichtung der vorgenannten Art mit einem Schieber bereitzustellen, wobei keine Gefahr des Einfangs von Hühnern und anderen Tieren besteht. Vorzugsweise soll die Türvorrichtung eine Verriegelung des Schiebers besitzen, die leicht und ohne manuellen Zugriff betätigbar ist und dabei aber nicht von den eingehausten Tieren selbst geöffnet werden kann. Insbesondere soll die Verrieglung eine Selbstblockierung ermöglichen. Bevorzugt soll die Türvorrichtung konstruktiv einfach und kostengünstig aufgebaut sein.

Diese Aufgabe wird gelöst mit der erfindungsgemäßen Türvorrichtung nach Anspruch 1 und dem erfindungsgemäßen Verfahren nach Anspruch 12. Vorteilhafte Weiterbildungen sind in den Unteransprüchen und in der nachfolgenden Beschreibung zusammen mit den Figuren angegeben.

Erfinderseits wurde erkannt, dass diese Aufgabe in überraschender Art und Weise dadurch gelöst werden kann, wenn eine Nothaltfunktion für den Schieber bereitgestellt wird, weil dann Hühner und dgl. Tiere nicht eingefangen werden.

Die erfindungsgemäße Türvorrichtung mit einem in einer Führung angeordneten Schieber und einem flexiblen Zugelement, das von einem Antrieb betätigbar ist, wobei der Schieber mit Hilfe des flexiblen Zugelements in der Führung von einer geöffneten in eine geschlossene Betriebsstellung vertikal verlagerbar ist, zeichnet sich dadurch aus, dass ein erster Sensor besteht, der den entspannten Zustand des flexiblen Zugelements oder den gespannten Zustand des flexiblen Zugelements ermittelt, wobei weiterhin ein Zeitnehmer besteht und eine Steuereinheit, die mit dem Zeitnehmer, dem ersten Sensor und dem Antrieb verbunden ist, wobei die Steuereinheit angepasst ist,
i) den Antrieb zu stoppen, wenn der erste Sensor das Bestehen des entspannten Zustands bzw. das Nichtmehrbestehen des gespannten Zustands anzeigt und die vom Zeitnehmer ermittelte Zeit seit Betätigung des Antriebs zum Absenken des Schiebers geringer ist als eine vorbestimmte Zeit und/oder
ii) den Antrieb zu stoppen, wenn der erste Sensor das Bestehen des entspannten Zustands bzw. das Nichtmehrbestehen des gespannten Zustands nicht anzeigt und die vom Zeitnehmer ermittelte Zeit seit Betätigung des Antriebs zum Absenken des Schiebers größer ist als eine vorbestimmte Zeit.

Der Fall i) tritt beispielsweise ein, wenn sich ein Hindernis unter dem Schieber innerhalb des Führungsraumes befindet, das ein Absenken des Schiebers verhindert. Dann wird das weitere Nichtabsenken festgestellt und der Antrieb angehalten, so dass der Schieber keinen weiteren Druck auf das Hindernis ausübt, so dass beispielsweise keine Hühner durch den Schieber eingefangen oder verletzt werden können.

Der Fall ii) kann dann auftreten, wenn sich ein Hindernis unter dem Schieber innerhalb des Führungsraumes befindet, dieses aber nicht steif genug ist, das Absenken des Schieber zu stoppen. Es wird dann das Absenken durch das Hindernis nur verlangsamt. Durch die Steuerung wird eine Beschädigung auch solcher Hindernisse verhindert.

Sowohl im Fall i) als auch im Fall ii) wird also eine sehr sichere Nothaltfunktion bereitgestellt.

In einer vorteilhaften Weiterbildung ist vorgesehen, dass die Steuereinheit angepasst ist, den Schieber nach einem Anhalten des Antriebs wieder anzuheben, bevorzugt vollständig zu öffnen, wodurch zu der Nothaltfunktion eine Notöffnungsfunktion ergänzt ist und dadurch die Türvorrichtung besonders sicher ausgebildet ist. Wenn die Steuereinheit angepasst ist, den Schieber nach mehreren, vorzugsweise drei Schließversuchen zu schließen und nicht wieder zu öffnen, wird einerseits eine besonders wirksame und sichere Nothaltfunktion bereitgestellt, wobei die Türvorrichtung andererseits dennoch gegenüber einem unbefugten Eindringen abgesichert ist.

In einer vorteilhaften Weiterbildung ist vorgesehen, dass die Steuereinheit mit einem zweiten Sensor zusammenwirkt, der die vollständige Öffnung des Schiebers ermittelt. Dadurch kann die Betriebsstellung der Türvorrichtung auch zur Steuerung anderer Vorgänge verwendet werden.

In einer vorteilhaften Weiterbildung ist vorgesehen, dass der erste Sensor und/oder der zweite Sensor ein magnetischer Sensor, bevorzugt ein Reed- oder Hall- oder anderer-Kontakt ist, oder ein mechanischer Sensor, wie beispielsweise ein Mikrotaster ist, der von einem Auslöser, beispielsweise einem Magneten oder einem Anschlag für den Mikrotaster o.ä. auslösbar ist, wobei vorzugsweise vorgesehen ist, dass der erste Auslöser am Verriegelungselement und der zweite Auslöser an dem Schieber angeordnet ist. Dadurch ist die Türvorrichtung konstruktiv besonders einfach und sicher aufgebaut.

In einer vorteilhaften Weiterbildung ist vorgesehen, dass eine Verriegelung des Schiebers gegenüber einem manuellen Anheben des Schiebers in der geschlossenen Betriebsstellung besteht, die durch das flexible Zugelement betätigbar ist. Vorteilhaft ist der Schieber mit Hilfe des flexiblen Zugelements in der Führung auch von der geschlossenen in die geöffnete Betriebsstellung vertikal verlagerbar. Dadurch ist die Verriegelung mit dem flexiblen Zugelement gekoppelt, wodurch eine Automatisierung der Betätigung der Verriegelung ermöglicht wird, ohne dass die eingehausten Tiere selbst die Verriegelung betätigen können.

Für diese Ausgestaltung der Verriegelung wird eigenständiger Schutz unabhängig davon beansprucht, ob eine Nothaltfunktion des Schiebers besteht. Für diese erfindungsgemäße Verriegelung ist nämlich die Nothaltfunktion nicht notwendig bzw. ist für diese erfindungsgemäße Betätigung der Verriegelung die Nothaltfunktion nicht notwendig.

Selbständiger Schutz wird daher beansprucht für die erfindungsgemäße Türvorrichtung mit einem in einer Führung angeordneten Schieber und einem flexiblen Zugelement, das von einem Antrieb betätigbar ist, wobei der Schieber mit Hilfe des flexiblen Zugelements in der Führung von einer geöffneten in eine geschlossene Betriebsstellung vertikal verlagerbar ist, wobei sich die Türvorrichtung dadurch auszeichnet, dass eine Verriegelung des Schiebers gegenüber einem manuellen Anheben des Schiebers in der geschlossenen Betriebsstellung besteht, die durch das flexible Zugelement betätigbar ist.

In einer vorteilhaften Weiterbildung ist vorgesehen, dass das flexible Zugelement angepasst ist, die Verriegelung zu lösen, wenn es gespannt ist und die Verriegelung zu bewirken, wenn es locker ist. Dadurch ist eine Selbstverriegelung in der geschlossenen Betriebsstellung des Schiebers möglich, weil dann eine Entspannung des flexiblen Zugelements vorliegt.

In einer vorteilhaften Weiterbildung ist vorgesehen, dass ein Verriegelungselement besteht, das die Verriegelung bewirkt. Dadurch ist die Verriegelung konstruktiv sehr einfach aufgebaut. Wenn das Verriegelungselement als verschwenkbares Hebelelement ausgebildet ist, dann kann die Betätigung der Verriegelung sehr einfach ermöglicht werden. Alternativ kann das Verriegelungselement als axial verlagerbares Element ausgebildet sein. Dadurch ist eine sehr sichere und verschleißarme Verriegelung ermöglicht.

In einer vorteilhaften Weiterbildung ist vorgesehen, dass das Verriegelungselement von dem flexiblen Zugelement betätigbar ist. Dadurch ist die Verriegelung konstruktiv sehr einfach aufgebaut.

In einer vorteilhaften Weiterbildung ist vorgesehen, dass das Verriegelungselement im verriegelten Zustand das flexible Zugelement auslenkt und im unverriegelten Zustand das flexible Zugelement nicht oder nur weniger auslenkt als im verriegelten Zustand. Dadurch ist die Verriegelung konstruktiv sehr einfach aufgebaut.

In einer vorteilhaften Weiterbildung ist vorgesehen, dass das flexible Zugelement das Verriegelungselement durchläuft und/oder an diesem anliegt. Dadurch wird die Verriegelung sehr sicher durch das flexible Zugelement betätigt. Wenn das flexible Zugelement an dem Schieber fixiert ist und vor dem Fixierungspunkt das Verriegelungselement durchläuft und/oder an diesem anliegt, wirken nur sehr geringe Kräfte auf das Verriegelungselement bzw. eine Vorspannung für das Verriegelungselement, so dass die Türvorrichtung sehr beständig und wartungsarm ausgebildet ist.

In einer vorteilhaften Weiterbildung ist vorgesehen, dass das Verriegelungselement im verriegelten Zustand mit dem Schieber wechselwirkt, wobei das Verriegelungselement bevorzugt in den Schieber und/oder in der Führung in die Bahn des Schiebers eingreift. Dadurch ist die Verriegelung konstruktiv sehr einfach und zugleich sicher wirkend aufgebaut.

In einer vorteilhaften Weiterbildung ist vorgesehen, dass das Verriegelungselement vorgespannt in Richtung der Wechselwirkung mit dem Schieber ausgebildet ist, wobei die Vorspannung bevorzugt durch eine Feder bereitgestellt ist. Dadurch erfolgt die Verriegelung stets sicher, weil durch die Vorspannung stets der verriegelte Zustand bevorzugt ist gegenüber dem unverriegelten Zustand.

In einer vorteilhaften Weiterbildung ist vorgesehen, dass die Vorrichtung so angepasst ist, dass das flexible Zugelement das Verriegelungselement gegen die Vorspannung verlagert, wenn der Antrieb das flexible Zugelement gegenüber dem Schieber spannt. Dadurch ist die Verriegelung konstruktiv sehr einfach und zugleich sicher wirkend aufgebaut.

Unabhängiger Schutz wird beansprucht für das erfindungsgemäße Verfahren zum Betätigen einer Türvorrichtung mit einem in einer Führung angeordneten Schieber und einem flexiblen Zugelement, das von einem Antrieb betätigbar ist, wobei der Schieber mit Hilfe des flexiblen Zugelements in der Führung von einer geöffneten in eine geschlossene Betriebsstellung vertikal verlagerbar ist, das dadurch gekennzeichnet ist, dass ein erster Sensor besteht, der den entspannten Zustand des flexiblen Zugelements oder den gespannten Zustand des flexiblen Zugelements ermittelt, wobei weiterhin ein Zeitnehmer besteht und eine Steuereinheit, die mit dem Zeitnehmer, dem ersten Sensor und dem Antrieb verbunden ist, wobei die Steuereinheit
i) den Antrieb stoppt, wenn der erste Sensor das Bestehen des entspannten Zustands bzw. das Nichtmehrbestehen des gespannten Zustands anzeigt und die vom Zeitnehmer ermittelte Zeit seit Betätigung des Antriebs zum Absenken des Schiebers geringer ist als eine vorbestimmte Zeit und/oder
ii) den Antrieb stoppt, wenn der erste Sensor das Bestehen des entspannten Zustands bzw. das Nichtmehrbestehen des gespannten Zustands nicht anzeigt und die vom Zeitnehmer ermittelte Zeit seit Betätigung des Antriebs zum Absenken des Schiebers größer ist als eine vorbestimmte Zeit.

In einer vorteilhaften Weiterbildung ist vorgesehen, dass die erfindungsgemäße Türvorrichtung verwendet wird.

In einer vorteilhaften Weiterbildung ist vorgesehen, dass eine Überwachung und/oder Regelung zumindest eines der Parameter Temperatur, Beleuchtung, Lüftung, Feuchtigkeit und Futtermenge erfolgt. Dadurch kann die Betätigung der Türvorrichtung von äußeren Einflüssen abhängig gemacht oder die Regelung solcher Einflüsse von der Betriebsstellung der Türvorrichtung abhängig gemacht werden. Beispielweise könnte eine Steuerung und Regelung der Beleuchtung dahingehend erfolgen, dass eine ständige Mlndestbeleuchtungsstärke in Abhängigkeit der natürlichen Lichtverhältnisse eingehalten wird. Insbesondere kann ein Sonnenaufgang am Morgen und ein Sonnenuntergang am Abend durch automatische Dimmung von dimmbaren LEDs oder Leuchtstofflampen simuliert werden. Die eingehausten Tiere haben dadurch über den gesamten Tag die erforderliche Stundenzahl an ausreichender Beleuchtung für ihr Wohlbefinden, egal ob Sommer oder Winter.

In einer vorteilhaften Weiterbildung ist vorgesehen, dass eine Steuerung der Öffnung des Schiebers besteht, die die Öffnung des Schiebers in Abhängigkeit von Tageszeit, Temperatur und/oder Helligkeit regelt. Dadurch kann der Öffnungsvorgang für den Schieber gezielt auf tatsächliche Notwendigkeiten hin angepasst werden.

In einer vorteilhaften Weiterbildung ist vorgesehen, dass eine Steuerung dahingehend besteht, dass bei offenem Schieber zumindest eine der Aktionen Ausschalten einer Heizung, Ausschalten einer Beleuchtung und Ausschalten einer Fütterung durchgeführt wird. Dadurch kann die Tierhaltung energetisch bzw. fütterungstechnisch verbessert werden. Wenn vorgesehen ist, dass die Beleuchtung über einen gewissen Zeitraum kontinuierlich oder diskontinuierlich verringert wird, wird eine Schockstarre bei beispielsweise Hühnern vermieden, die eintritt, wenn sich eine Beleuchtung schlagartig ändert, so dass das Herausgehen der Hühner aus dem durch die Türvorrichtung verschließbaren Raum ins beispielweise Freie gewährleistet wird.

In einer vorteilhaften Weiterbildung ist vorgesehen, dass vor Schließung des Schiebers eine der Aktionen Einschalten einer Beleuchtung und Einschalten einer Fütterung durchgeführt wird. Dadurch werden die Tiere veranlasst, den durch die Türvorrichtung verschließbaren Raum aufzusuchen. Wenn die Beleuchtung über einen gewissen Zeitraum kontinuierlich oder diskontinuierlich bis auf eine Maximalleuchtstärke vergrößert wird, kann wiederum eine mögliche Schockstarre vermieden werden. Wenn bei geschlossenem Schieber eine Heizung angeschaltet wird, kann die Tierhaltung energetisch verbessert werden, weil keine oder nur wesentlich weniger Wärme durch die Türvorrichtung austreten kann.

In einer vorteilhaften Weiterbildung ist vorgesehen, dass vor Schließung des Schiebers eine der Aktionen Einschalten einer Beleuchtung und Einschalten einer Fütterung durchgeführt wird. Dadurch erfolgt eine sogenannte "Lockbeleuchtung" bzw. "Lockfütterung", wodurch die Tiere angelockt werden, durch den geöffneten Schieber zu treten, um dadurch möglichst kein Tier in einem Außenraum zurückzulassen.

Die Merkmale und weiteren Vorteile der vorliegenden Erfindung werden im Folgenden anhand der Beschreibung eines bevorzugten Ausführungsbeispiels im Zusammenhang mit den Figuren deutlich werden. Dabei zeigen rein schematisch:
- Fig. 1: die erfindungsgemäße Türvorrichtung gemäß einer ersten bevorzugten Ausgestaltung in einer Draufsicht von vorn in einer geschlossenen Betriebsstellung,
- Fig. 2: die Türvorrichtung nach Fig. 1 in einer Draufsicht von vorn in einer geöffneten Betriebsstellung,
- Fig. 3: die Türvorrichtung nach Fig. 1 in einer Draufsicht von hinten in einer geschlossenen Betriebsstellung,
- Fig. 4: die Türvorrichtung nach Fig. 1 in einer Draufsicht von hinten in einer geöffneten Betriebsstellung,
- Fig. 5: die Türvorrichtung nach Fig. 1 in einer Seitenansicht in einer geschlossenen Betriebsstellung,
- Fig. 6: die Türvorrichtung nach Fig. 1 in einer Seitenansicht in einer geöffneten Betriebsstellung,
- Fig. 7: die Türvorrichtung nach Fig. 1 in einer detaillierten Seitenansicht in einer geschlossenen Betriebsstellung,
- Fig. 8: die Türvorrichtung nach Fig. 1 in einer detaillierten Seitenansicht in einer geöffneten Betriebsstellung,
- Fig. 9: die Betätigung der Türvorrichtung nach Fig. 1 in einer Draufsicht von vorn,
- Fig. 10: die Betätigung der Türvorrichtung nach Fig. 1 in einer Draufsicht von oben, und
- Fig. 11: die Betätigung der Türvorrichtung gemäß einer zweiten bevorzugten Ausgestaltung in einer Draufsicht von oben.

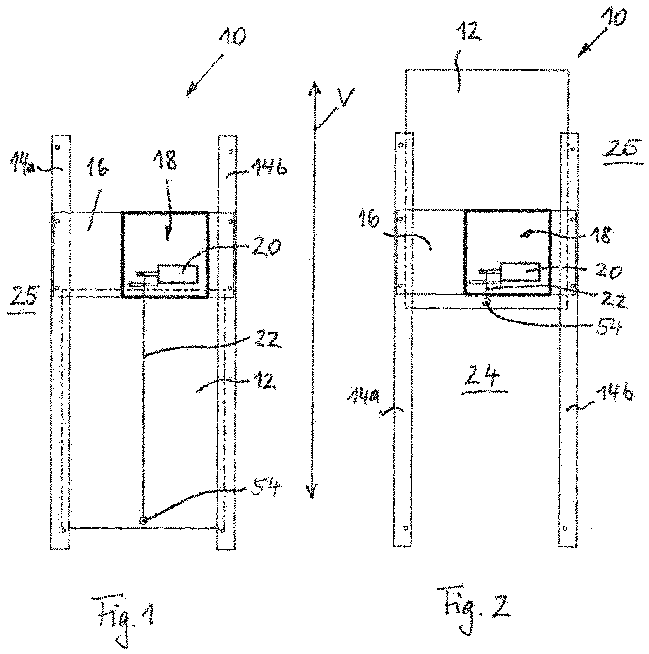

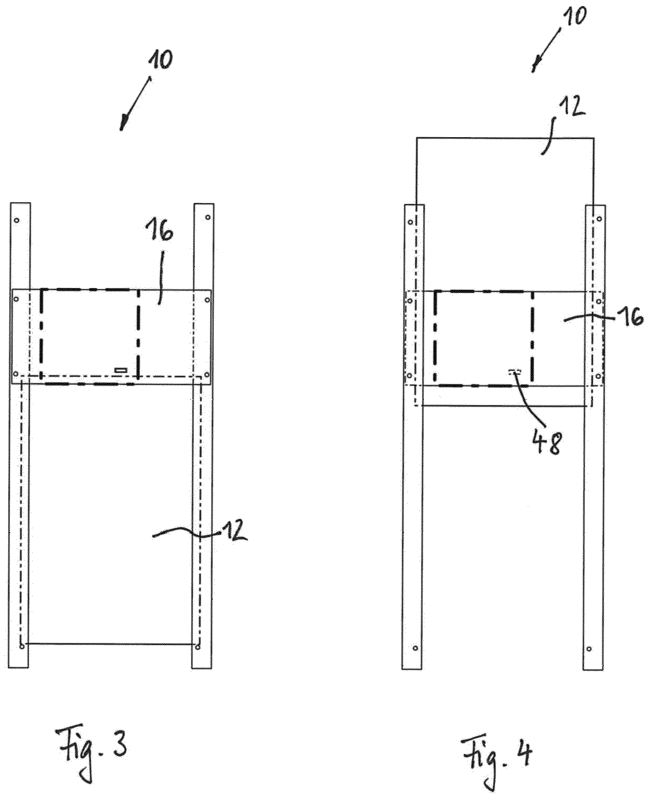

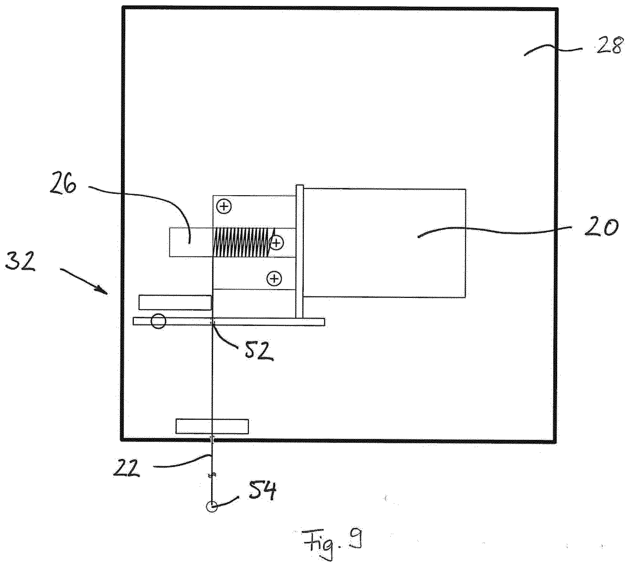

In den Fig. 1 bis 10 ist die erfindungsgemäße Türvorrichtung 10 in verschiedenen Ansichten gemäß einer ersten bevorzugten Ausgestaltung gezeigt.

Es ist zu erkennen, dass die Türvorrichtung 10 einen Schieber 12 aufweist, der in einer Führung 14 in vertikaler Richtung V verschieblich angeordnet ist. Die Führung weist zwei Führungsschienen 14a, 14b auf, die eine Führungsnut (nicht gezeigt) für den Schieber 12 besitzen.

In einem oberen Abschnitt der Führungsschienen 14a, 14b ist ein Querträger 16 angeordnet, der die Betätigungseinheit 18 der Türvorrichtung 10 trägt. Diese Betätigungseinheit 18 weist einen als Elektromotor ausgebildeten Antrieb 20 für ein flexibles Zugelement in der Form eines Zugseiles 22 auf, das mit dem Schieber 12 in einem unteren Abschnitt des Schiebers 12 an einem Fixierungspunkt 23 fest verbunden ist.

Mit Hilfe dieses Antriebs 20 kann unter Vermittlung des Zugseils 22 der Schieber 12 von einer in den Fig. 1, 3, 5 und 7 gezeigten geschlossenen Betriebsstellung in eine in den Fig. 2, 4, 6 und 8 gezeigten geöffneten Betriebsstellung überführt werden, wobei der Schieber 12 in der geöffneten Betriebsstellung eine Öffnungen 24 in einer nicht näher gezeigten Wand 26 freigibt. Dabei wickelt sich das Zugseil 22 auf einer Antriebswelle 26 auf bzw. ab.

Die Betätigungseinheit 18 weist eine Montageplatte 28 auf ein, die in einem geschlossenen Kasten 30 aufgenommen ist, wobei die Montageplatte 28 an dem Querträger 16 mittels geeigneter Befestigungsmittel (nicht gezeigt) befestigt ist.

Weiterhin befindet sich an der Betätigungseinheit 18 die Verriegelung 32 des Schiebers 12, die ein als Hebel ausgebildetes Verriegelungselement 34 aufweist. Der Hebel 34 ist gegenüber einem Drehpunkt 36 verschwenkbar gelagert und weist einen ersten Hebelabschnitt 38 auf und einen zweiten Hebelabschnitt 40. Zwischen dem ersten Hebelabschnitt 38 und dem zweiten Hebelabschnitt 40 besteht ein Verriegelungsstift 42, der durch Öffnungen 44, 46, 48 in der Montageplatte 28, dem Gehäuse 30 und dem Querträger 16 greifen kann.

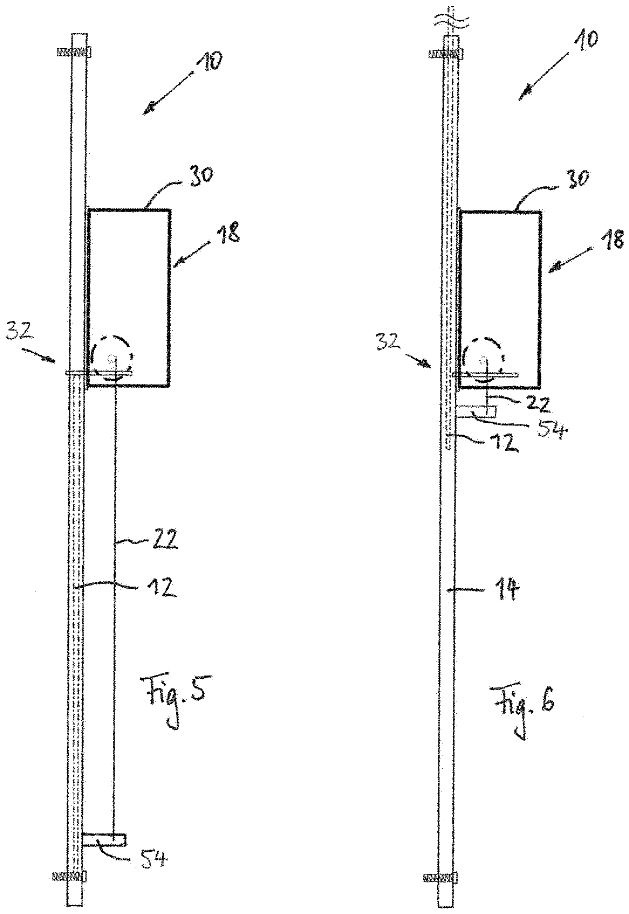

Der zweite Hebelabschnitt 40 ist gegenüber der Montageplatte 28 mittels der Spiralfeder 50 vorgespannt, so dass der Verriegelungsstift 42 in einer Ausgangsposition die Öffnungen 44, 46, 48 stets durchgreift und dabei in die Führungsebene zwischen den Führungsschienen 14a, 14b greift (vgl. Fig. 5), um den Schieber 12 zu blockieren, so dass dieser nicht angehoben werden kann.

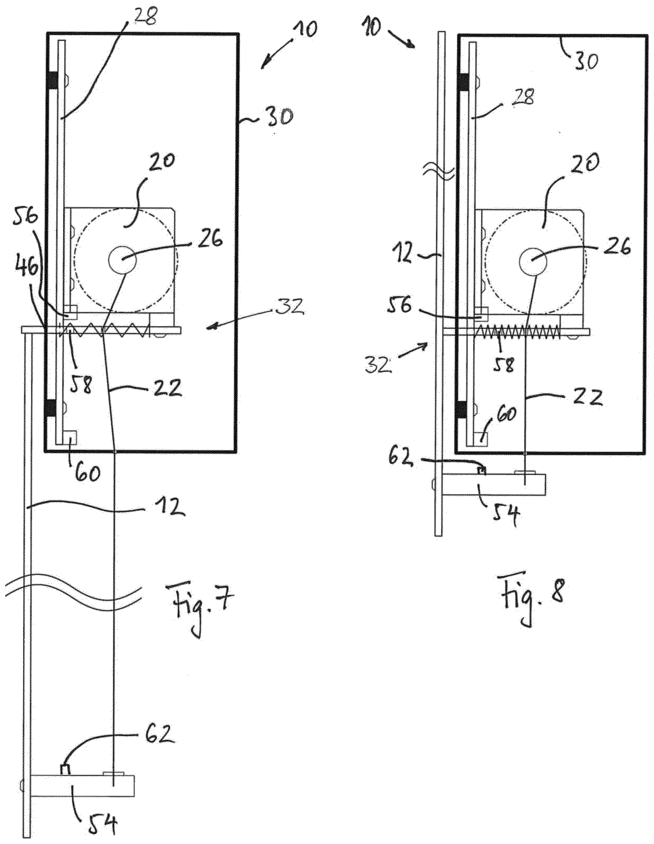

Der erste Hebelabschnitt 38 weist eine Durchbrechung 52 auf, durch die das Zugseil 22 geführt ist. In der Ausgangsposition des Hebels 34 wird das Zugseil 22, das einerseits an der Antriebswelle 26 und andererseits an einem Befestigungselement 54 (Fixierungspunkt) an dem Schieber 12 angeordnet ist, ausgelenkt, wie in Fig. 7 deutlich zu erkennen ist. Dadurch wird die Verriegelung sichergestellt.

Das Verriegelungselement 34 ist somit als einseitig an dem Drehpunkt 36 gelagerter Hebel 34 ausgebildet, wobei der Verriegelungsstift 42 zwischen Drehpunkt 36 und zweitem Hebelabschnitt 40, der über die Spiralfeder 52 vorgespannt wird, angeordnet ist. Der Angriffspunkt 52 für das Zugseil 22 befindet sich wiederum zwischen Drehpunkt 36 und Verriegelungsstift 42.

Im in Fig. 8 gezeigten entriegelten Zustand ist das Zugseil 22 durch den Hebel 34 nicht mehr so stark ausgelenkt, weist allerdings immer noch eine gewisse Auslenkung auf. Dadurch wird die Entriegelung sichergestellt.

In der Betätigungseinheit 18 befindet sich ein erster Sensor 56, der als Magnetsensor ausgebildet ist und mit einem ersten Impulsgeber 58 zusammenwirkt, der als Magnet ausgebildet ist. Der erste Impulsgeber 58 ist an dem Verriegelungsstift 42 so angeordnet, dass der erste Magnetsensor 56 ein Signal gibt, wenn sich der Hebel 34 in der Ausgangsposition befindet (vgl. Fig. 7) und kein Signal gibt, wenn sich der Hebel 34 nicht in der Ausgangsposition befindet (vgl. Fig. 8).

Außerdem befindet sich in der Betätigungseinheit 18 ein zweiter Sensor 60, der ebenfalls als Magnetsensor ausgebildet ist und mit einem zweiten Impulsgeber 62 zusammenwirkt, der ebenfalls als Magnet ausgebildet ist. Der zweite Impulsgeber 62 ist an dem Befestigungselement 54 angeordnet, so dass der zweite Magnetsensor 60 die Öffnungsstellung des Schiebers 12 erfassen kann und somit ein Signal gibt, wenn sich der Schieber 12 in der in Fig. 8 gezeigten vollständig offenen Stellung befindet, und kein Signal gibt, wenn sich der Schieber 12 nicht in der vollständig offenen Stellung befindet (vgl. Fig. 7).

Weiterhin besteht eine Steuerung (nicht gezeigt) der Türvorrichtung, die Bedienelemente (nicht gezeigt) an dem Gehäuse 30 aufweist du auch Kommunikationsmittel (nicht gezeigt) zur Kommunikation der Steuerung mit einer mobilen Computereinrichtung, wie beispielsweise einem Smartphone, Tablet oder dgl.

Zusätzlich können Sensoren (nicht gezeigt) für die Außenbeleuchtung, die Innenbeleuchtung, die Außentemperatur, die Innentemperatur und/oder die Luftfeuchtigkeit innen bestehen. Außerdem kann die Steuerung mit Aktoren kommunizieren, die die Innenbeleuchtung, die Innentemperatur, die Futtergabe und/oder die Innenbelüftung steuern, wobei hinsichtlich der Innenbeleuchtung nicht nur eine An-/Ausschaltung ermöglicht wird, sondern auch eine graduelle Steuerung, so dass beispielsweise Sonnenauf- oder untergänge simuliert werden können.

Die Türvorrichtung 10 funktioniert nun folgendermaßen.

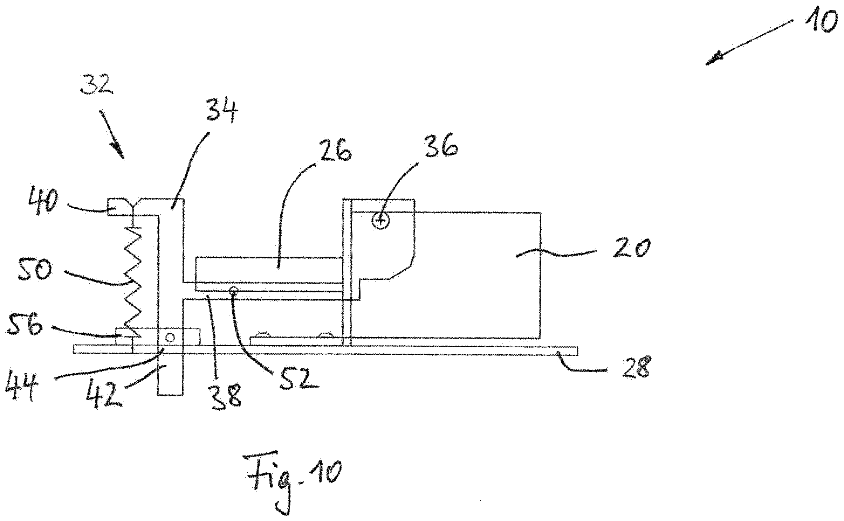

In dem in den Fig. 1, 3, 5 und 7 gezeigten geschlossenen Betriebszustand des Schiebers 12 ist die Öffnung 24 verschlossen, wobei der Verriegelungsstift 42 eine Öffnung des Schiebers 12 durch dessen Anheben von unten sicher sperrt. Jegliche eingehausten Tiere, aber auch Tiere von außen können somit den Schieber 12 nicht einfach selbständig anheben, weil eine Selbstverriegelung durch das entspannte Zugseil 22 aufgrund der Vorspannung des Hebels 34 vorliegt (vgl. Fig. 7 und Fig. 10).

Wenn der Schieber 12 geöffnet werden soll, muss dies zwangsweise über den Antrieb 20 erfolgen, der über die Antriebswelle 26 das Zugseil 22 nach oben zieht und dadurch strafft. Durch diese Straffung wird das durch die Durchbrechung 52 laufende Zugseil 22 von der Montageplatte 28 weg bewegt, wodurch eine Kraft gegen den Hebel 34 wirkt, die die Vorspannung durch die Feder 50 überwindet und dadurch den Verriegelungsstift 42 aus der Führungsbahn des Schiebers 12 entfernt, wodurch der Schieber 12 freigegeben wird und mit dem Zugseil 22 hochgezogen werden kann.

Es besteht somit eine Zwangskopplung der Entriegelung und des Hochziehens des Schiebers 12, so dass das kein Anheben des Schiebers 12 ohne aktives Ziehen des Zugseils 22 möglich ist.

Weiterhin besteht eine Nothaltfunktion dahingehend, dass die Steuerung beim Absenken des Schiebers 12 überwacht, ob die Schieber 12 nicht auf Hindernissen (nicht gezeigt) aufsitzt. Genauer gesagt wird mithilfe des ersten Sensors 56 in Zusammenwirkung mit dem ersten Impulsgeber 58 überprüft, ob sich das Zugseil 22 entspannt, weil das entweder für ein vollständiges Schließen des Schiebers 12 spricht oder für ein Hindernis, dass das Schließen verhindert. Wenn das Zugseil 22 entspannt wird, detektiert dies der erste Magnetsensor 56 mithilfe der Aktivierung durch den ersten Impulsgeber 58. Zugleich wird immer die Zeit seit Aktivierung des Antriebs 20 gemessen und mit einer vorgegebenen Zeit verglichen, die üblicherweise für eine vollständige Schließung der Öffnung 24 durch den Schieber 12 benötigt wird. Für den Fall, dass diese Zeit noch nicht erreicht ist, dennoch der erste Magnetsensor 56 die Entspannung des Zugseils 22 anzeigt, muss ein Hindernis bestehen. Dann wird der Schieber 12 mittels des Antriebs 20 über das Zugseil 22 wieder angehoben. Wenn das Hindernis ein lebendes Objekt ist, wird es sich wegbegeben, so dass die Öffnung 24 wieder frei ist und der Schieber 12 in einem nachfolgenden Anlauf geschlossen werden kann. Es sind drei solcher Schließversuche vorgesehen. Nach dem erfolglosen Ablauf des dritten Versuchs wird der Schieber 12 aus Sicherheitsgründen soweit es geht geschlossen, um keine Eindringlinge zuzulassen, wobei ein Anzeigealarm an dem Gehäuse 30 bzw. der mobilen Computereinrichtung ausgegeben wird, um dies einer die Türvorrichtung 10 überwachenden Person anzuzeigen, so dass dieser eine Überprüfung der Türvorrichtung 10 vornehmen und diese ggf. warten bzw. entsprechende Hindernisse entfernen kann.

Außerdem könnte auch ein Nothalt vorgenommen werden, wenn die abgelaufene Zeit seit der Absenkung des Schiebers 12 zu lang ist ohne, dass eine Entspannung des Zugseils 12 festgestellt wird, weil dann ein schwaches Hindernis besteht, das den Schieber 12 zwar nicht blockiert, dessen Absenkung jedoch verlangsamt. Dieses Hindernis kann auch in zu hoher Reibung innerhalb der Führung 14 bedingt sein. Nach Ausgabe eines entsprechenden Alarms kann dieses Hindernis ebenfalls behoben werden.

Schließlich kann die Türvorrichtung 10 in zahlreiche Regelungsmöglichkeiten eingebunden werden.

So kann eine Überwachung und/oder Regelung zumindest eines der Parameter Temperatur, Beleuchtung, Lüftung, Feuchtigkeit und Futtermenge erfolgen, wodurch die Betätigung der Türvorrichtung von äußeren Einflüssen abhängig gemacht oder die Regelung solcher Einflüsse von der Betriebsstellung der Türvorrichtung abhängig gemacht werden können.

Beispielsweise kann eine Steuerung der Öffnung des Schiebers 12 bestehen, die die Öffnung des Schiebers 12 in Abhängigkeit von Tageszeit, Temperatur und/oder Helligkeit regelt. Dadurch kann der Öffnungsvorgang für den Schieber 12 gezielt auf tatsächliche Notwendigkeiten hin angepasst werden.

Außerdem kann eine Steuerung dahingehend bestehen, dass bei offenem Schieber 12 zumindest eine der Aktionen Ausschalten einer Heizung, Ausschalten einer Beleuchtung und Ausschalten einer Fütterung durchgeführt wird. Dadurch kann die Tierhaltung energetisch bzw. fütterungstechnisch verbessert werden. Wenn dabei die Beleuchtung kontinuierlich oder diskontinuierlich verringert wird, kann eine Schockstarre beispielsweise von Hühnern vermieden werden.

Weiterhin kann bei geschlossenem Schieber 12 eine Heizung angeschaltet werden, wenn erforderlich. Dadurch kann der Tierhaltungsraum gezielt geheizt werden ohne Gefahr von Wärmeverlusten durch die Öffnung 24.

Schließlich kann vor der Schließung des Schiebers 12 eine der Aktionen Einschalten einer Beleuchtung und Einschalten einer Fütterung durchgeführt werden, um dadurch eine sogenannte "Lockbeleuchtung" bzw. "Lockfütterung" durchzuführen, wodurch die Tiere angelockt werden, durch den geöffneten Schieber 12 zu treten, um dadurch möglichst kein Tier in einem Außenraum zurückzulassen. Auch dabei kann die Beleuchtung kontinuierlich oder diskontinuierlich verändert werden, um eine Schockwirkung auf die Tiere zu vermeiden.

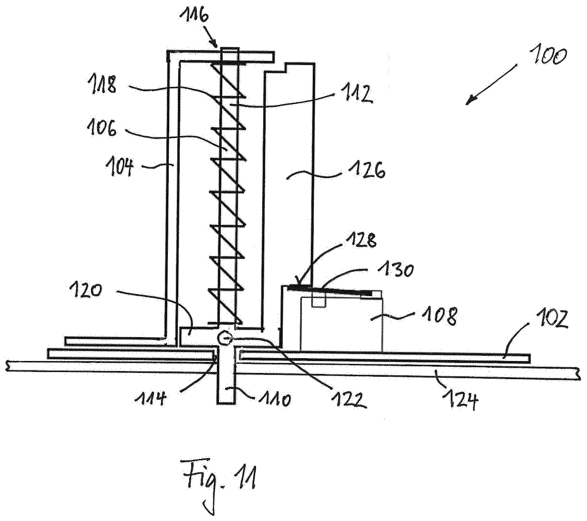

In Fig. 11 ist die erfindungsgemäße Türvorrichtung 100 gemäß einer zweiten bevorzugten Ausgestaltung in einer Ansicht entsprechend Fig. 10 für die erfindungsgemäße Türvorrichtung 10 gemäß der ersten bevorzugten Ausgestaltung gezeigt, wobei der Übersichtlichkeit halber Antrieb 20 und Antriebswelle 26 sowie flexibles Zugelement 22 nicht gezeigt sind. Die übrigen Elemente werden im Folgenden identisch zur ersten bevorzugten Ausgestaltung der Türvorrichtung 10 beschrieben.

Es ist zu erkennen, dass bei dieser Türvorrichtung 100 an einer Montageplatte 102 eine Halterung 104 für ein Verriegelungselement 106 angeordnet ist und ein Mikroendschalter (Endlagenschalter) 108. Das axial verlagerbare Verriegelungselement 106 weist wiederum einen Verriegelungsstift 110 auf, der an einer Achse 112 angeordnet ist. Der Verriegelungsstift 110 durchgreift eine Öffnung 114 in der Montageplatte 102 und die Achse 112 durchgreift eine Öffnung 116 in der Halterung 104. Um die Achse 112 ist eine Spiralfeder 118 angeordnet, die sich einerseits an der Halterung 104 und andererseits an einem Querschenkel 120 des Verriegelungselements 106 abstützt. Der Querschenkel 120 bildet zugleich einen Anschlag an der Montageplatte 102, um die Eindringtiefe des Verriegelungsstiftes 110 in die Öffnung 114 der Montageplatte 102 zu begrenzen.

Im Schnittpunkt zwischen Querschenkel 120, Verriegelungsstift 110 und Achse 112 befindet sich eine Durchbrechung 122 zu Durchführung des flexiblen Zugelements 22 (hier nicht gezeigt). Sowohl die hier nicht gezeigte Antriebswelle 26 als auch der Fixierungspunkt 54 für das flexible Zugelement 22 an dem Schieber 124 sind beabstandet von der Ebene der Montageplatte 102 so angeordnet, dass sich im entspannten Zustand des flexiblen Zugelements 22 entsprechend Fig. 7 eine V-förmige Auslenkung des flexiblen Zugelements 22 ergibt.

Schließlich weist das Verriegelungselement 106 einen Ausleger 126 mit einem Anschlag 128 für den Taster 130 des Mikroendschalters 108 auf, wodurch der endspannte Zustand des flexiblen Zugelements 22 durch Betätigung des Tasters 130 und der gespannte Zustand des flexiblen Zugelements 22 durch Nichtbetätigung des Tasters 130 feststellbar sind. Dieser gespannte Zustand tritt wiederum dadurch auf, dass der Antrieb 20 mit seiner Antriebswelle 26 das flexible Zugelement 22 zieht. Dadurch wird die Achse 112 entgegen der Kraft der Feder 118 tiefer in die Öffnung 116 hineinverlagert, wodurch der Verriegelungsstift 110 vollständig aus der Führung 14 des Schieber 124 entfernt wird und der Schieber 124 dadurch freigegeben wird und nach oben bewegt werden kann.

Auch hier besteht somit eine Zwangskopplung der Entriegelung und des Hochziehens des Schiebers 124, so dass das kein Anheben des Schiebers 124 ohne aktives Ziehen des Zugseils 22 möglich ist.

Der Mikroendschalter 108 wirkt hier als erster Sensor, so dass die Nothaltfunktion identisch ausführbar ist, wozu auf die entsprechenden Ausführungen zur erfindungsgemäße Türvorrichtung 10 gemäß der ersten bevorzugten Ausgestaltung verwiesen wird.

In den beiden gezeigten Ausführungsformen der Türvorrichtung 10, 100 greift das Verriegelungselement 34, 106 in die Führung für den Schieber 12, 124 ein. Stattdessen könne der Schieber 12, 124 auch eine Öffnung oder Durchbrechung (nicht gezeigt) aufweisen, in die das Verriegelungselement 34, 106 eingreift.

Aus der vorstehenden Darstellung ist deutlich geworden, dass mit der vorliegenden Erfindung eine Türvorrichtung 10, 100 bereitgestellt wird, die eine Verriegelung des Schiebers 12, 124 besitzt, die leicht und ohne manuellen Zugriff betätigbar ist und dabei aber nicht von den eingehausten Tieren selbst geöffnet werden kann. Die Verrieglung 32 besitzt eine Selbstblockierung und weist einen Nothalt für die Schließung des Schiebers 12, 124 auf. Dabei ist die Türvorrichtung 10, 100 konstruktiv einfach und kostengünstig aufgebaut. Dabei kann die erfindungsgemäße Verriegelung auch ohne den erfindungsgemäßen Nothalt bereitgestellt werden und der erfindungsgemäße Nothalt kann auch ohne die erfindungsgemäße Verriegelung bereitgestellt werden.

Soweit nichts anders angegeben ist, können sämtliche Merkmale der vorliegenden Erfindung frei miteinander kombiniert werden. Auch die in der Figurenbeschreibung beschriebenen Merkmale können, soweit nichts anderes angegeben ist, als Merkmale der Erfindung frei mit den übrigen Merkmalen kombiniert werden. Eine Beschränkung einzelner Merkmale des Ausführungsbeispiels auf die Kombination mit anderen Merkmalen des Ausführungsbeispiels ist dabei ausdrücklich nicht vorgesehen. Außerdem können gegenständliche Merkmale der Vorrichtung umformuliert auch als Verfahrensmerkmale Verwendung finden und Verfahrensmerkmale umformuliert als gegenständliche Merkmale der Vorrichtung. Eine solche Umformulierung ist somit automatisch mit offenbart.

### Bezugszeichenliste

- 10: erfindungsgemäße Türvorrichtung gemäß einer ersten bevorzugten Ausgestaltung
- 12: Schieber
- 14: Führung
- 14a, 14b: Führungsschienen
- 16: Querträger
- 18: Betätigungseinheit
- 20: Antrieb, Elektromotor
- 22: flexibles Zugelement, Zugseil
- 24: Öffnungen
- 25: Wand
- 26: Antriebswelle
- 28: Montageplatte
- 30: Kasten, Gehäuse
- 32: Verriegelung des Schiebers 12
- 34: Verriegelungselement, Hebel
- 36: Drehpunkt
- 38: erster Hebelabschnitt
- 40: zweiter Hebelabschnitt
- 42: Verriegelungsstift
- 44: Öffnung in der Montageplatte 28
- 46: Öffnung in dem Gehäuse 30
- 48: Öffnung in dem Querträger 16
- 50: Spiralfeder
- 52: Durchbrechung im ersten Hebelabschnitt
- 54: Befestigungselement, Fixierungspunkt
- 56: erster Sensor, Magnetsensor
- 58: erster Auslöser, Impulsgeber, Magnet
- 60: zweiter Sensor, Magnetsensor
- 62: zweiter Auslöser, Impulsgeber, Magnet
- 100: erfindungsgemäße Türvorrichtung gemäß einer zweiten bevorzugten Ausgestaltung
- 102: Montageplatte
- 104: Halterung
- 106: Verriegelungselement
- 108: Mikroendschalter, Endlagenschalter, erster Sensor
- 110: Verriegelungsstift
- 112: Achse
- 114: Öffnung in der Montageplatte 102
- 116: Öffnung in der Halterung
- 118: Spiralfeder
- 120: Querschenkel
- 122: Durchbrechung
- 124: Schieber
- 126: Ausleger
- 128: Anschlag
- 130: Taster des Mikroendschalters 108
- V: vertikale Richtung

## Patentansprüche

1. Türvorrichtung (10; 100) mit einem in einer Führung (14, 14a, 14b) angeordneten Schieber (12; 124) und einem flexiblen Zugelement (22), das von einem Antrieb (20) betätigbar ist, wobei der Schieber (12; 124) mit Hilfe des flexiblen Zugelements (22) in der Führung (14, 14a, 14b) von einer geöffneten in eine geschlossene Betriebsstellung vertikal (V) verlagerbar ist, **dadurch gekennzeichnet, dass** ein erster Sensor (56; 108) besteht, der den entspannten Zustand des flexiblen Zugelements (22) oder den gespannten Zustand des flexiblen Zugelements (22) ermittelt, wobei weiterhin ein Zeitnehmer besteht und eine Steuereinheit, die mit dem Zeitnehmer, dem ersten Sensor (56; 108) und dem Antrieb (20) verbunden ist, wobei die Steuereinheit angepasst ist,
i) den Antrieb (20) zu stoppen, wenn der erste Sensor (56; 108) das Bestehen des entspannten Zustands bzw. das Nichtmehrbestehen des gespannten Zustands anzeigt und die vom Zeitnehmer ermittelte Zeit seit Betätigung des Antriebs (20) zum Absenken des Schiebers (12; 124) geringer ist als eine vorbestimmte Zeit und/oder
ii) den Antrieb (20) zu stoppen, wenn der erste Sensor (56; 108) das Bestehen des entspannten Zustands bzw. das Nichtmehrbestehen des gespannten Zustands nicht anzeigt und die vom Zeitnehmer ermittelte Zeit seit Betätigung des Antriebs (20) zum Absenken des Schiebers (12; 124) größer ist als eine vorbestimmte Zeit.

2. Türvorrichtung (10; 100) nach Anspruch 2, **dadurch gekennzeichnet,**
**dass** die Steuereinheit angepasst ist, den Schieber (12; 124) nach einem Anhalten des Antriebs (20) wieder anzuheben, bevorzugt vollständig zu öffnen, wobei die Steuereinheit insbesondere angepasst ist, den Schieber (12; 124) nach mehreren, vorzugsweise drei Schließversuchen zu schließen und nicht wieder zu öffnen, und/oder
**dass** die Steuereinheit mit einem zweiten Sensor (60) zusammenwirkt, der die vollständige Öffnung des Schiebers (12; 124) ermittelt.

3. Türvorrichtung (10; 120) nach Anspruch 1 oder 2, **dadurch gekennzeichnet, dass** der erste Sensor (56; 108) und/oder der zweite Sensor (60) ein magnetischer Sensor, bevorzugt ein Reed- oder Hall-Kontakt ist, oder ein mechanischer Sensor, bevorzugt ein Mikrotaster ist, der von einem Auslöser (58, 62), bevorzugt einem Magneten oder einem Anschlag (128) für den Mikrotaster (130), auslösbar ist, wobei vorzugsweise vorgesehen ist, dass der erste Auslöser (58; 128) am Verriegelungselement (34; 106) und der zweite Auslöser (62) an dem Schieber (12; 124) angeordnet ist.

4. Türvorrichtung (10; 100) nach einem der vorherigen Ansprüche, **dadurch gekennzeichnet, dass** eine Verriegelung (32) des Schiebers (12; 124) gegenüber einem manuellen Anheben des Schiebers (12; 124) in der geschlossenen Betriebsstellung besteht, die durch das flexible Zugelement (22) betätigbar ist.

5. Türvorrichtung (10; 100) nach Anspruch 4, **dadurch gekennzeichnet,**
**dass** ein Verriegelungselement (34; 106) besteht, das die Verriegelung (32) bewirkt, wobei das Verriegelungselement bevorzugt als verschwenkbares Hebelelement (34) oder axial verlagerbares Element (106) ausgebildet ist, und/oder
**dass** das flexible Zugelement (22) angepasst ist, die Verriegelung (32) zu lösen, wenn es gespannt ist und die Verriegelung (32) zu bewirken, wenn es locker ist.

6. Türvorrichtung (10) nach Anspruch 5, **dadurch gekennzeichnet, dass** das Verriegelungselement (34; 106) von dem flexiblen Zugelement (22) betätigbar ist.

7. Türvorrichtung (10; 100) nach Anspruch 5 oder 6, **dadurch gekennzeichnet, dass** das Verriegelungselement (34; 106) im verriegelten Zustand das flexible Zugelement (22) auslenkt und im unverriegelten Zustand das flexible Zugelement (22) nicht oder nur weniger auslenkt als im verriegelten Zustand.

8. Türvorrichtung (10; 100) nach einem der Ansprüche 5 bis 7, **dadurch gekennzeichnet, dass** das flexible Zugelement (22) das Verriegelungselement (34; 106) durchläuft (52; 122) und/oder an diesem anliegt, wobei das flexible Zugelement (22) bevorzugt an dem Schieber (12; 124) fixiert (54) ist und vor dem Fixierungspunkt (54) das Verriegelungselement (34; 106) durchläuft (52; 122) und/oder an diesem anliegt.

9. Türvorrichtung (10; 100) nach einem der Ansprüche 5 bis 6, **dadurch gekennzeichnet, dass** das Verriegelungselement (34; 106) im verriegelten Zustand mit dem Schieber (12; 124) wechselwirkt, wobei das Verriegelungselement (34; 106) bevorzugt in den Schieber und/oder in der Führung (14) in die Bahn des Schiebers (12; 124) eingreift.

10. Türvorrichtung (10; 100) nach einem der Ansprüche 5 bis 9, **dadurch gekennzeichnet, dass** das Verriegelungselement (34; 106) vorgespannt in Richtung der Wechselwirkung mit dem Schieber (12; 124) ausgebildet ist, wobei die Vorspannung bevorzugt durch eine Feder (50; 118) bereitgestellt ist.

11. Türvorrichtung (10; 100) nach Anspruch 10, **dadurch gekennzeichnet, dass** die Vorrichtung (10; 100) so angepasst ist, dass das flexible Zugelement (22) das Verriegelungselement (34; 106) gegen die Vorspannung (50; 1118) verlagert, wenn der Antrieb (20) das flexible Zugelement (22) gegenüber dem Schieber (12; 124) spannt.

12. Verfahren zum Betätigen einer Türvorrichtung (10; 100) mit einem in einer Führung (14, 14a, 14b) angeordneten Schieber (12; 124) und einem flexiblen Zugelement (22), das von einem Antrieb (20) betätigbar ist, wobei der Schieber (12; 124) mit Hilfe des flexiblen Zugelements (22) in der Führung (14, 14a, 14b) von einer geöffneten in eine geschlossene Betriebsstellung vertikal (V) verlagerbar ist, **dadurch gekennzeichnet, dass** ein erster Sensor (56; 108) besteht, der den entspannten Zustand des flexiblen Zugelements (22) oder den gespannten Zustand des flexiblen Zugelements (22) ermittelt, wobei weiterhin ein Zeitnehmer besteht und eine Steuereinheit, die mit dem Zeitnehmer, dem ersten Sensor (56; 108) und dem Antrieb (20) verbunden ist, wobei die Steuereinheit
i) den Antrieb (20) stoppt, wenn der erste Sensor (56; 108) das Bestehen des entspannten Zustands bzw. das Nichtmehrbestehen des gespannten Zustands anzeigt und die vom Zeitnehmer ermittelte Zeit seit Betätigung des Antriebs (20) zum Absenken des Schiebers (12; 124) geringer ist als eine vorbestimmte Zeit und/oder
ii) den Antrieb (20) stoppt, wenn der erste Sensor (56; 108) das Bestehen des entspannten Zustands bzw. das Nichtmehrbestehen des gespannten Zustands nicht anzeigt und die vom Zeitnehmer ermittelte Zeit seit Betätigung des Antriebs (20) zum Absenken des Schiebers (12; 124) größer ist als eine vorbestimmte Zeit.

13. Verfahren nach Anspruch 12, **dadurch gekennzeichnet,**
**dass** die Türvorrichtung (10; 100) nach einem der Ansprüche 1 bis 11 verwendet wird und/oder
**dass** eine Überwachung und/oder Regelung zumindest eines der Parameter Temperatur, Beleuchtung, Lüftung, Feuchtigkeit und Futtermenge erfolgt.

14. Verfahren nach Anspruch 12 oder 13, **dadurch gekennzeichnet, dass** eine Steuerung der Öffnung des Schiebers (12; 124) besteht, die die Öffnung des Schiebers (12; 124) in Abhängigkeit von Tageszeit, Temperatur und/oder Helligkeit regelt.

15. Verfahren nach einem der Ansprüche 12 bis 14, **dadurch gekennzeichnet,**
**dass** eine Steuerung dahingehend besteht, dass bei offenem Schieber (12; 124) zumindest eine der Aktionen Ausschalten einer Heizung, Ausschalten einer Beleuchtung und Ausschalten einer Fütterung durchgeführt wird, wobei insbesondere vorgesehen ist, dass die Beleuchtung über einen gewissen Zeitraum kontinuierlich oder diskontinuierlich verringert wird, und/oder
**dass** vor Schließung des Schiebers (12; 124) eine der Aktionen Einschalten einer Beleuchtung und Einschalten einer Fütterung durchgeführt wird, wobei bevorzugt vorgesehen ist, dass die Beleuchtung über einen gewissen Zeitraum kontinuierlich oder diskontinuierlich bis auf eine Maximalleuchtstärke vergrößert wird, und/oder dass bei geschlossenem Schieber (12; 124) eine Heizung angeschaltet wird.
